# EUROPEAN PATENT SPECIFICATION

(11) **EP 2 966 354 B1**
(45) Date of publication and mention of the grant of the patent: **29.11.2017**
(21) Application number: 14176123.9
(22) Date of filing: 08.07.2014
(51) Int. Cl.: F23N 1/02, F23N 5/18, F23N 5/24, F24H 8/00

(54) **Method for operating a gas burner**
Verfahren zum Betrieb eines Gasbrenners
Procédé de fonctionnement d'un brûleur à gaz

(43) Date of publication of application: 13.01.2016
(73) Proprietor: Honeywell Technologies Sarl, 1180 Rolle (CH)
(72) Inventor: Blaauwwiekel, Piet, 7841 EB Sleen, Drenthe (NL)
(74) Representative: Sturm, Christoph

(56) References cited:
- EP-A1- 1 843 094
- EP-A1- 2 623 865
- AT-A4- 510 002
- DE-A1- 4 134 230
- DE-A1-102006 026 613

## Description

The present patent application relates to a method for operating a gas burner.

EP 1 084 369 B1 and EP 1 179 159 B1 each disclose a method for operating a gas burner. According to this prior art documents, during burner-on phases of the respective gas burner a gas/air mixture having a defined mixing ratio of gas and air is provided to a burner chamber of the gas burner. The gas/air mixture is provided by mixing an air flow provided by an air duct with a gas flow provided by a gas duct using a mixing device. The quantity of the gas/air mixture is adjusted by a fan. The defined mixing ratio of the gas/air mixture is controlled by a controller on basis of a signal provided by an electrical or electronic sensor. According to EP 1 084 369 B1, the electrical or electronic sensor is coupled to the gas duct and to the air duct. According to EP 1 179 159 B1, the electrical or electronic sensor is coupled to the gas duct and to a reference point. The electrical or electronic sensor is especially designed as a flow-meter. An actual value corresponding to a pressure ratio between the gas pressure in the gas duct and the air pressure in the air duct or corresponding to a pressure ratio between the gas pressure in the gas duct and the air pressure at the reference point is provided by the electrical or electronic sensor, wherein this actual value is compared with a nominal value. A control variable for a gas valve assigned to the gas duct is generated on basis of the control deviation between the actual value and nominal value, wherein the gas valve is adjusted on basis of this control variable in order to provide the defined mixing ratio of gas and air in the gas/air mixture.

According to EP 1 084 369 B1 and EP 1 179 159 B1, the defined mixing ratio of gas and air of the gas/air mixture is kept constant over the entire modulation range of the gas burner. In other words, according to the prior art the mixing ratio of the gas/air mixture is kept constant over the entire fan speed range of the fan, either to provide a 1:1 gas-air control having a ratio between the gas pressure and the air pressure of 1:1 over the entire modulation range of the gas burner or to provide a 1 :N (N>1) gas-air control having a ratio between the gas pressure and the air pressure of 1 :N over the entire modulation range of the gas burner.

DE 102 58 187 A1 discloses a method for operating a gas burner wherein on basis of a signal provided by a flame ionization sensor is becomes detected if a siphon of the burner chamber is blocked.

DE 41 34 230 A1 discloses another method for operating a gas burner. This method allows to detect if a siphon assigned to a burner chamber is blown empty.

Additional prior art is disclosed by AT 510 002 A4.

Against this background, a novel method for operating a gas burner is provided.

The method for operating a gas burner is defined in claim 1. When during burner-on phases the fan is operated with constant fan speed and when further while the fan is operated with constant fan speed a defined change of the control variable for a gas valve is detected which is required to keep the actual value of the signal provided by the electrical or electronic sensor at the nominal value for the same, it is detected that a siphon assigned to burner chamber of the gas burner is blown empty. The invention provides for the first time a simple, reliable and robust method to detect if the siphon of the burner chamber is blown empty.

According to a preferred embodiment, the siphon is detected to be blown empty when the absolute change of the control variable for the gas valve which is required to keep the actual value of the signal provided by the electrical or electronic sensor at the nominal value of the same is within a defined time period greater than a defined threshold.

According to another preferred embodiment, the siphon is detected to be blown empty when the first time-derivation of the change of the control variable for the gas valve which is required to keep the actual value of the signal provided by the electrical or electronic sensor at the nominal value of the same is greater than a defined threshold.

Preferred developments of the invention are provided by the dependent claims and the description which follows. Exemplary embodiments are explained in more detail on the basis of the drawing, in which:

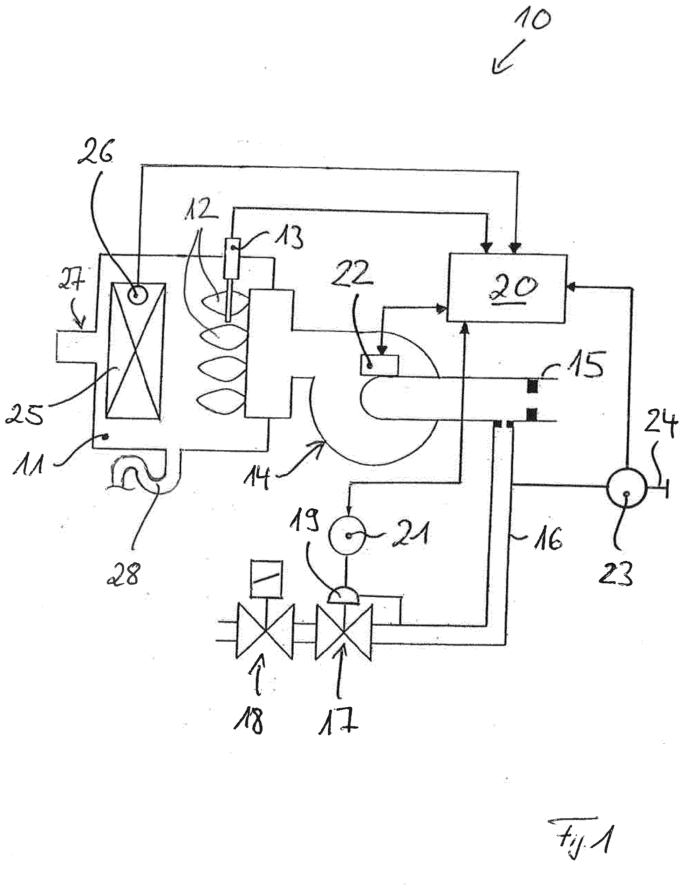

- Figure 1: shows a schematic view of a gas burner.

Figure 1 shows a schematic view of a gas burner 10. The gas burner 10 comprises a burner chamber 11 in which combustion of a gas/air mixture takes place during burner-on phases of the gas burner 10. The combustion of the gas/air mixture results into flames 12 monitored by e.g. a flame ionization sensor 13. The flame ionization sensor 13 is an optional component of the gas burner 10 and not required for the present invention.

The gas/air mixture is provided to the burner chamber 11 of the gas burner 10 by mixing an air flow with a gas flow. A fan 14 sucks in air flowing through an air duct 15 and gas flowing though a gas duct 16. A gas valve 17 for adjusting the gas flow through the gas duct 16 and a safety valve 18 are assigned to the gas duct 16. The position of the gas valve 17 is adjusted by a pressure regulator 19.

The gas/air mixture having a defined mixing ratio of gas and air is provided to the burner chamber 11 of the gas burner 10. The gas/air mixture is provided by mixing the air flow provided by an air duct 15 with a gas flow provided by a gas duct 16. The air flow and the gas flow become preferably mixed by a mixing device. Such a mixing device can be designed as a Venturi nozzle (not shown).

The quantity of the air flow and thereby the quantity of the gas/air mixture flow is adjusted by the fan 14, namely by the speed of the fan 14. The fan speed can be adjusted by an actuator 22 of the fan 14.

The defined mixing ratio of the gas/air mixture is controlled by a controller 20 on basis of a signal provided by an electrical or electronic sensor 23. In the shown embodiment, the electrical or electronic sensor 23 is coupled to the gas duct 16 and to a reference point 24. The electrical or electronic sensor 23 is preferably designed as a mass flow sensor like a flow-meter.

An actual value corresponding to a pressure ratio between the gas pressure in the gas duct 16 and the air pressure at the reference point 24 is provided by the electrical or electronic sensor 23. This actual value is compared by the controller 20 with a nominal value stored in the controller 20.

The controller 20 generates a control variable for the gas valve 17, namely for an actuator 21 of the gas valve 17, on basis of the control deviation between the actual value provided by the electrical or electronic sensor 23 and the nominal value stored in the controller 20.

The gas valve position of the gas valve 17 is adjusted by the actuator 21 of the same on basis of this control variable in order to provide the defined mixing ratio of gas and air in the gas/air mixture.

According to Figure 1, the flames 12 resulting form the combustion of the gas/air mixture are used to heat a heat exchanger 25 positioned in the burner chamber 11. A temperature sensor 26 is used to measure a temperature of the heat exchanger 25, especially a temperature of water flowing through the heat exchanger 25.

Exhaust gas resulting from the combustion of the gas/air mixture can exit from the burner chamber 11 though an exhaust pipe 27.

A siphon 28 is assigned to the burner chamber. The siphon 28 is under regular operating conditions of the gas burner 10 filled with condensate.

As described above, the controller 20 generates a control variable for the gas valve 17, namely for an actuator 21 of the gas valve 17. The actuator 21 of the gas valve 17 can be a stepper motor. The control variable for the gas valve 17, namely for the actuator 21 of the gas valve 17, is generated on basis of a deviation between the actual value of the signal provided by the sensor 23 and the nominal value for said sensor signal.

When during burner-on phases the fan 14 is operated with constant fan speed, and when further while the fan 14 is operated with constant fan speed a defined change of the control variable for a gas valve 17, namely for the actuator 21 of the gas valve 17, is detected which is required to keep the actual value of the signal provided by the electrical or electronic sensor 23 at the nominal value for the same, it is detected that the siphon 28 assigned to burner chamber 11 of the gas burner 10 is blown empty.

The siphon 28 is preferably detected to be blown empty when the absolute change of the control variable for the gas valve 17, namely for the actuator 21 of the gas valve 17, which is required to keep the actual value of the signal provided by the electrical or electronic sensor 23 at the nominal value of the same is within a defined time period greater than a defined threshold.

Alternatively, the siphon 28 is detected to be blown empty when the first time-derivation of the change of the control variable for the gas valve 17, namely for the actuator 21 of the gas valve 17, which is required to keep the actual value of the signal provided by the electrical or electronic sensor 23 at the nominal value of the same is greater than a defined threshold.

Both changes of the control variable can be considered to be a sudden change of the control variable for the gas valve 17, namely for the actuator 21 of the gas valve 17. Such a sudden change of said control variable at constant fan speed is according to the present invention used an indication for an empty siphon 28.

The detection of a blown free siphon 28 is based on a sudden change of the control variable for the gas control. The gas control links the gas pressure to the air pressure through the sensor 23. If the siphon 28 blows empty, this causes a sudden reduction of the flow resistance of the appliance, because an empty siphon 28 suddenly allows combustion gas to flow out of the burner chamber 11, whereby the combustion gas can normally, with a siphon 28 being not blown free, flow through the exhaust pipe 27 only. The sudden creation of an extra outlet by the blown free siphon 28 causes a sudden increase of the air flow. This sudden increase of air flow is causing a sudden increase of the representing air pressure. The gas control will accommodate the gas pressure to the new increased air pressure, resulting in the sudden change of the gas valve position. As a result, a blown free siphon 28 causes a sudden change of the control variable for the gas valve 17.

If the controller 20 determines that the siphon 28 is blown empty, the controller 20 preferably initiates at least one defined action.

One preferred action initiated by the controller 20 in response to a detected empty siphon is that the controller 20 generates a service signal or warning signal indicating that the burner should be inspected by a service person.

Another preferred action initiated by the controller 20 in response to a detected empty siphon is that the gas burner 10 is shut down by the controller 20.

### List of reference signs

- 10: gas burner
- 11: burner chamber
- 12: flame
- 13: ionization sensor
- 14: fan
- 15: air duct
- 16: gas duct
- 17: regulating valve
- 18: safety valve
- 19: pressure regulator
- 20: controller
- 21: actuator
- 22: actuator
- 23: sensor
- 24: reference point
- 25: heat exchanger
- 26: temperature sensor
- 27: exhaust pipe
- 28: siphon

## Claims

1. Method for operating a gas burner (10), wherein during burner-on phases a gas/air mixture having a defined mixing ratio of gas and air is provided to a burner chamber (11) of the gas burner (10) for combusting the gas/air mixture within the burner chamber (11), wherein the gas/air mixture is provided by mixing an air flow sucked in by a fan (14) with a gas flow, wherein the defined mixing ratio of the gas/air mixture is controlled by comparing an actual value of a signal provided by an electrical or electronic sensor (23) coupled to a gas duct (16) with a nominal value for the signal provided by the electrical or electronic sensor (23) and by generating a control variable for a gas valve (17) assigned to the gas duct (16) on basis of the control deviation between the actual value and the nominal value, wherein the actual value provided by the electrical or electronic sensor (23) corresponds to a pressure ratio between the gas pressure in the gas duct (16) and the air pressure at a reference point (24), **characterized in that** when during burner-on phases the fan (14) is operated with constant fan speed and when further while the fan (14) is operated with constant fan speed a defined change of the control variable for a gas valve (17) is detected which is required to keep the actual value of the signal provided by the electrical or electronic sensor (23) at the nominal value for the same, it is detected that a siphon (28) assigned to burner chamber (11) of the gas burner (10) is blown empty.

2. Method as claimed in claim 1, **characterized in that** the siphon (28) is detected to be blown empty when the absolute change of the control variable for the gas valve (17) which is required to keep the actual value of the signal provided by the electrical or electronic sensor (23) at the nominal value of the same is within a defined time period greater than a defined threshold.

3. Method as claimed in claim 1, **characterized in that** the siphon (28) is detected to be blown empty when the first time-derivation of the change of the control variable for the gas valve (17) which is required to keep the actual value of the signal provided by the electrical or electronic sensor (23) at the nominal value of the same is greater than a defined threshold.

4. Method as claimed in one of claims 1 to 3, **characterized in that** if the siphon (28) is detected to be blown empty, a warning signal is generated.

5. Method as claimed in one of claims 1 to 4, **characterized in that** if the siphon (28) is detected to be blown empty, the burner is shut-down.

## Patentansprüche

1. Verfahren zum Betreiben eines Gasbrenners (10), wobei in Phasen, in welchen der Brenner eingeschaltet ist, einer Brennkammer (11) des Gasbrenners (10) ein Gas-Luft-Gemisch, das ein definiertes Mischverhältnis von Gas und Luft aufweist, bereitgestellt wird zur Verbrennung des Gas-Luft-Gemischs in der Brennkammer (11), wobei das Gas-Luft-Gemisch bereitgestellt wird durch Mischen eines Luftstroms, der durch ein Gebläse (14) angesaugt wird, mit einem Gasstrom, wobei das definierte Mischverhältnis des Gas-Luft-Gemischs geregelt wird durch Vergleichen eines tatsächlichen Werts eines Signals, das von einem elektrischen oder elektronischen Sensor (23), der mit einer Gasleitung (16) verbunden ist, bereitgestellt wird, mit einem Nominalwert für das Signal, das durch den elektrischen oder elektronischen Sensor (23) bereitgestellt wird, und durch Erzeugen einer Regelgröße für ein Gasventil (17), das der Gasleitung (16) zugeordnet ist, auf der Grundlage der Regelabweichung zwischen dem tatsächlichen Wert und dem Nominalwert, wobei der vom elektrischen oder elektronischen Sensor (23) bereitgestellte tatsächliche Wert einem Druckverhältnis zwischen dem Gasdruck in der Gasleitung (16) und dem Luftdruck an einem Bezugspunkt (24) entspricht,
**dadurch gekennzeichnet, dass** erkannt wird, dass ein Siphon (28), der der Brennkammer (11) des Gasbrenners (10) zugeordnet ist, leergeblasen ist, wenn das Gebläse (14) in Phasen, in welchen der Brenner eingeschaltet ist, mit konstanter Gebläsegeschwindigkeit betrieben wird, und wenn ferner, während das Gebläse (14) mit konstanter Gebläsegeschwindigkeit betrieben wird, eine definierte Veränderung der Regelgröße für ein Gasventil (17) erkannt wird, die erforderlich ist, um den tatsächlichen Wert des vom elektrischen oder elektronischen Sensor (23) bereitgestellten Signals auf dem Nominalwert für dasselbe zu halten.

2. Verfahren nach Anspruch 1, **dadurch gekennzeichnet, dass** erkannt wird, dass der Siphon (28) leergeblasen ist, wenn die absolute Veränderung der Regelgröße für das Gasventil (17), die erforderlich ist, um den tatsächlichen Wert des vom elektrischen oder elektronischen Sensor (23) bereitgestellten Signals auf dem Nominalwert desselben zu halten, innerhalb eines definierten Zeitraums größer ist als ein definierter Schwellwert.

3. Verfahren nach Anspruch 1, **dadurch gekennzeichnet, dass** erkannt wird, dass der Siphon (28) leergeblasen ist, wenn die erste Zeitableitung der Veränderung der Regelgröße für das Gasventil (17), die erforderlich ist, um den tatsächlichen Wert des vom elektrischen oder elektronischen Sensor (23) bereitgestellten Signals auf dem Nominalwert desselben zu halten, größer ist als ein definierter Schwellwert.

4. Verfahren nach einem der Ansprüche 1 bis 3, **dadurch gekennzeichnet, dass** ein Warnsignal erzeugt wird, falls erkannt wird, dass der Siphon (28) leergeblasen ist.

5. Verfahren nach einem der Ansprüche 1 bis 4, **dadurch gekennzeichnet, dass** der Brenner abgeschaltet wird, falls erkannt wird, dass der Siphon (28) leergeblasen ist.

## Revendications

1. Procédé pour faire fonctionner un brûleur à gaz (10), dans lequel pendant des phases de mise en fonctionnement du brûleur, un mélange air/gaz ayant un rapport de mélange défini de gaz et d'air est fourni à une chambre de combustion (11) du brûleur à gaz (10) pour brûler le mélange air/gaz dans la chambre de combustion (11), dans lequel le mélange air/gaz est fourni en mélangeant un flux d'air aspiré par un ventilateur (14) avec un écoulement gazeux, dans lequel le rapport de mélange défini du mélange air/gaz est régulé en comparant une valeur actuelle d'un signal fourni par un capteur électrique ou électronique (23) couplé à une conduite de gaz (16) ayant une valeur nominale pour le signal fourni par le capteur électrique ou électronique (23) et en générant une variable de contrôle pour une soupape à gaz (17) attribuée à la conduite de gaz (16) sur la base de l'écart de régulation entre la valeur actuelle et la valeur nominale, dans lequel la valeur actuelle fournie par le capteur électrique ou électronique (23) correspond à un rapport de pression entre la pression du gaz dans la conduite de gaz (16) et la pression d'air au niveau d'un point de référence (24), **caractérisé en ce que,** lorsque pendant des phases de mise en fonctionnement du brûleur, le ventilateur (14) est mis en fonctionnement avec une vitesse de ventilateur constante et lorsqu'en outre, pendant que le ventilateur (14) est mis en fonctionnement avec une vitesse de ventilateur constante, un changement défini de la variable de contrôle d'une soupape à gaz (17) est détecté, lequel est nécessaire pour garder la valeur actuelle du signal fourni par le capteur électrique ou électronique (23) à sa valeur nominale, il est détecté qu'un siphon (28) attribué à la chambre de combustion (11) du brûleur à gaz (10) se révèle être vide.

2. Procédé selon la revendication 1, **caractérisé en ce qu'**il est détecté que le siphon (28) se révèle être vide lorsque le changement absolu de la variable de contrôle de la soupape à gaz (17) qui est nécessaire pour garder la valeur actuelle du signal fourni par le capteur électrique ou électronique (23) à sa valeur nominale se situe pendant une période de temps définie plus importante qu'un seuil défini.

3. Procédé selon la revendication 1, **caractérisé en ce qu'**il est détecté que le siphon (28) se révèle être vide lorsque la première dérivation temporelle du changement de la variable de contrôle de la soupape à gaz (17) qui est nécessaire pour garder la valeur actuelle du signal fourni par le capteur électrique ou électronique (23) à sa valeur nominale est supérieure à un seuil défini.

4. Procédé selon l'une quelconque des revendications 1 à 3, **caractérisé en ce que** s'il est détecté que le siphon (28) se révèle être vide, un signal d'avertissement est généré.

5. Procédé selon l'une quelconque des revendications 1 à 4, **caractérisé en ce que** s'il est détecté que le siphon (28) se révèle être vide, le brûleur est éteint.
